(19) Europäisches Patentamt
European Patent Office
Office européen des brevets

(11) Veröffentlichungsnummer: **0 360 128 B1**

(12) # EUROPÄISCHE PATENTSCHRIFT

(45) Veröffentlichungstag der Patentschrift: **23.12.92**

(21) Anmeldenummer: **89116818.9**

(22) Anmeldetag: **12.09.89**

(51) Int. Cl.5: **C08L 25/14**, C08L 33/08, C08L 33/12, //(C08L25/14, 33:12),(C08L33/08,33:12), (C08L33/12,25:14),(C08L33/12, 33:08)

(54) **Verträgliche Polymermischungen (I).**

(30) Priorität: **16.09.88 DE 3831500**

(43) Veröffentlichungstag der Anmeldung: **28.03.90 Patentblatt 90/13**

(45) Bekanntmachung des Hinweises auf die Patenterteilung: **23.12.92 Patentblatt 92/52**

(84) Benannte Vertragsstaaten: **AT BE CH DE ES FR GB IT LI NL SE**

(56) Entgegenhaltungen: **US-A- 4 159 288**

(73) Patentinhaber: **Röhm GmbH**
**Kirschenallee Postfach 4242**
**W-6100 Darmstadt 1(DE)**

(72) Erfinder: **Siol, Werner, Dr.**
**Goerdelerweg 17**
**W-6100 Darmstadt-Eberstadt(DE)**
Erfinder: **Terbrack, Ulrich**
**Berliner Strasse 3**
**W-6107 Reinheim 2(DE)**

**EP 0 360 128 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft verträgliche Polymermischungen aus den Komponenten Polymethylmethacrylat und Styrol-Methylacrylatcopolymere.

Stand der Technik

Beim Mischen von Hochpolymeren kann man mit einiger Wahrscheinlichkeit erwarten, daß sie sich als unverträglich erweisen (vgl. Kirk-Othmer 3rd Ed. Vol.18, pp. 443 - 478, D. Wiley 1982). Polystyrol und Polyalkylmethacrylate können für alle praktischen Zwecke als Beispiele für unverträgliche Polymere gelten. So wird von M.T. Shaw et al. eine Mischbarkeit von nur 3,4 ppm Polymethylmethacrylat (PMMA, Molekulargewicht 160 000) mit Polystyrol angegeben (vgl. Chem. Abstr. 101 73417 e). Sogar sehr niedermolekulares Polystyrol ist mit PMMA sehr wenig verträglich (R.R. Parent et al. J. Polym. Sci, Polymer Physics Ed. 16, 1829 (1987). Andere Polyalkylmethacrylate sind ebenfalls mit Polystyrol unverträglich. Ausnahmen scheinen lediglich Mischungen aus Polystyrol und Polycyclohexylacrylat und Polycyclohexylmethacrylat zu bilden (vgl. DE-A 36 32 369). Während also das Homopolymere des Styrols mit der großen Mehrheit der Polyalkylmethacrylate unverträglich ist, gilt diese Unverträglichkeit nicht für Copolymere aus Styrol und Acrylnitril. So hat man bei bestimmten Styrol-Acrylnitrilcopolymeren Verträglichkeit mit PMMA festgestellt (vgl. J.W. Barlow et al. Polymer 28, 1177 (1987). Da diese Verträglichkeit aber offenbar nur bei ganz speziellen Copolymer-Zusammensetzungen der Styrol-Acrylnitril-Komponente gefunden wird, spricht man anschaulich von "Mischbarkeitsfenstern." In solchen Fällen kann die Mischbarkeit der speziellen Styrol-Acrylnitril-Copolymeren mit PMMA auf erhebliche Abstoßungskräfte zwischen der Styrol- und der Acrylnitrileinheit im Copolymeren zurückgeführt werden.

Eine ähnliche Situation dürfte bei StyrolMaleinsäureanhydrid-Copolymeren vorliegen, die ebenfalls bei bestimmten Styrol-Maleinsäureanhydrid-Verhältnissen mit PMMA verträglich sind. In diese Reihe PMMA-verträglicher Styrolcopolymerer gehören wahrscheinlich auch die Copolymeren aus Styrol und Allylalkohol sowie die Copolymeren aus Styrol und p-(2-Hydroxyhexafluoroisopropyl)styrol, deren PMMA-Verträglichkeit allerdings auch durch Wasserstoffbrückenbindung der Hydroxylgruppe mit der PMMA-Estergruppe gedeutet wurde [B.Y.Min and Eli M. Pearce, Organic Coatings and Plastic Chemistry, 45, 58 - 64 (1981); F. Cangelori and M.T. Shaw, Polymer Preprints (Am. Chem. Soc., Div. Polym. Chem.) 24, (1983), 258 - 259].

Obwohl demnach die Verträglichkeit von PMMA mit Copolymeren aus Styrol und stark polaren Monomeren wie Acrylnitril, Maleinsäureanhydrid, Allylalkohol und p-(2-Hydroxyhexafluoroisopropyl)styrol bereits seit Jahren bekannt war, wurden diese verträglichen Polymermischungen doch stets als Ausnahmeerscheinung in der großen Fülle der unverträglichen Polystyrol/Polyalkylmethacrylat-Mischungen angesehen. Dies ist um so verständlicher, als in aller Regel die Verträglichkeit dieser Styrolcopolymeren auf PMMA als Mischungspartner beschränkt war.

Mechanische Abmischungen von Polymeren haben in bestimmten Fällen und auf bestimmten Gebieten der Kunststoffindustrie zu eigenschaftsmäßig verbesserten Produkten geführt und zum Teil die Skala der Einsatzmöglichkeiten beträchtlich erweitert (vgl. Kirk-Othmer, Vol. 18, loc.cit). Die physikalischen Eigenschaften solcher "Polyblends" stellen gewöhnlich einen Kompromiß dar, der in den günstigen Fällen eine Verbesserung bedeuten kann, verglichen mit den Eigenschaften der individuellen Polymeren. Die technischen Einsatzmöglichkeiten nicht-verträglicher (multiphasiger) Polymermischungen sind dabei oft besser beurteilt worden als die verträglicher Mischungen (vgl. Kirk-Othmer loc.cit. pg. 449).

Besonders breite Anwendung haben unverträgliche Mischungen aus PMMA und vernetzten Styrolacrylsäureester-Copolymeren gefunden, wobei der Styrol-Acrylat-Gummi als Zähphase in eine PMMA-Matrix eingelagert wird. Insbesondere sind hier Mischungen aus PMMA und Butyl- oder Ethylacrylatstyrolcopolymeren mit etwa 16 Gew.-% Styrol im Copolymeren zu nennen. Derartige Styrol-Butylacrylat-Copolymeren weisen denselben Brechungsindex wie PMMA auf ($n^{20}_D$ = 1,492), so daß diese Mischungen trotz Unverträglichkeit transparent sind.

Derartige unverträgliche Mischungen werden beispielsweise in JP-A 61/252 263, JP-A 62/164 749, DE-A 11 64 080, JP-A 16 818/70, DE-A 33 00 526.5 oder von C. Hooley et al. Plast. Rubber Process, Appl. 1 (1981), 345 - 349 sowie von Tsutsumi, Masahide et al., JP-A 57/39 745 beschrieben. In all diesen Arbeiten wird von einem in der Regel vernetzten Styrolacrylatcopolymeren ausgegangen, das mit dem abgemischten PMMA unverträglich ist und als Gummi in die PMMA-Matrix eingelagert ist. Die Glastemperatur dieser Styrolacrylatgummies liegt in der Regel < 0 Grad C oder wenigstens < 20 Grad C, damit diese Polymeren auch als Gummi wirken können. Entscheidend für ihre Funktion als Gummi ist jedoch ihre Unverträglichkeit mit dem PMMA, also die Zweiphasigkeit dieser Materialien.

Aufgabe und Lösung

Verträgliche Polymermischungen mit günstigen mechanischen Eigenschaften können insbesondere aufgrund ihrer zu erwartenden guten optischen Eigenschaften auf das Interesse der Technik rechnen. Andererseits bestand bei Berücksichtigung des geschilderten Standes der Technik wenig Aussicht, auf der Basis von Styrol-(Co)-polymerisaten einerseits und Polyalkyl(meth)acrylaten andererseits als Mischungskomponenten zu technisch interessanten **verträglichen** Polymermischungen zu gelangen.
Es wurde nun gefunden, daß überraschenderweise auch Styrol-Acrylsäureester-Copolymere mit Polymethylmethacrylaten sehr gut verträgliche Polymermischungen bilden, wenn bestimmte, klar definierbare Randbedingungen eingehalten werden.
Die vorliegende Erfindung betrifft daher verträgliche Polymermischungen PM aus zwei verschiedenen Polymerkomponenten:

A) 0,1 bis 99,9 Gew.-%, vorzugsweise 5 - 95 Gew.-%, insbesondere 15 - 85 Gew.-% eines Copolymeren, aufgebaut aus den Monomeren

a)

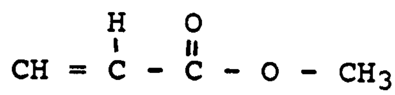

und

b)

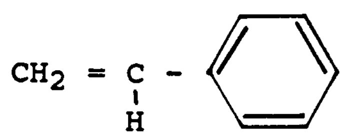

und gegebenenfalls

c) einer oder mehreren weiteren, von Methylacrylat und Styrol verschiedenen monomeren Vinylverbindungen

und

B) 99,9 - 0,1 Gew.-%, vorzugsweise 95 - 5 Gew.-%, insbesondere 85 - 15 Gew.-% eines Polymethylmethacrylats, aufgebaut aus mehr als 90 Gew.-% Methylmethacrylat, vorzugsweise aus wenigstens 92 Gew.-%, insbesondere aus wenigsten 97 Gew.-% Methylmethacrylat mit der Maßgabe, daß
das Monomere a)
90 bis 10 Gew-%, vorzugsweise 85 -30 Gew.-%, insbesondere 80 - 40 Gew.-% und besonders bevorzugt 74 - 45 Gew.-% bezogen auf das Polymerisat A) und
das Monomere b)
10 bis 90 Gew.-%, vorzugsweise 15 - 70 Gew.-% insbesondere 20 - 60 Gew.-% und besonders bevorzugt 25 - 55 Gew.-% bezogen auf das Polymerisat A) und
die Komponente c)
0 bis <10 Gew.-%, vorzugsweise 0,5 bis 10 Gew.-%, vorzugsweise 1 - 8 Gew.-% bezogen auf das Polymerisat A) ausmachen.

Bei den monomeren Vinylverbindungen der Komponente C) handelt es sich um an sich gebräuchliche, der radikalischen Polymerisation zugängliche Monomere [vgl. etwa Ullmann's Encyclopädie der techn. Chemie, Bd. 14, 108 - 110, Urban & Schwarzenberg 1963; siehe "die Polymerkomponente A)" im folgenden].

Die Charakterisierung der erfindungsgemäßen Polymermischungen PM als verträgliche Mischungen erfolgt nach den anerkannten Kriterien (vgl. Kirk-Othmer, loc.cit. pp. 457 - 460, Vol. 18; Brandrup-Immergut, Polymer Handbook, 2nd Ed. Wiley Interscience III-211, 1975)

i) Bei Anwendung optischer Verfahren beobachtet man bei den erfindungsgemäßen Polymermischungen PM einen einzigen Brechungsindex, der zwischen denen der beiden Polymerkomponenten A) und B) liegt.

ii) Die Polymermischungen PM besitzen eine einzige Glasübergangstemperatur Tg (die zwischen der der Polymerkomponenten liegt).

Als ein anderer Test auf die Mischbarkeit von Polymeren wird das Auftreten der **Lower Critical Solution Temperature (LCST)** herangezogen. Die Existenz des LCST beruht auf dem Vorgang, daß sich beim Erwärmen die bis anhin klare Mischung in Phasen auftrennt und optisch trübe wird. Dieses Verfahren stellt einen eindeutigen Beweis dafür dar, daß die ursprüngliche Polymermischung aus einer einzigen, im Gleichgewicht befindlichen homogenen Phase bestand.
(Vgl. DE-A 34 36 476 bzw. USA 4 722 595).

Ferner können Polymermischungen das Phänomen der **Upper Critical Solution Temperature** (UCST) zeigen: Umgekehrt wie beim Vorliegen der LCST zeigen solche Polymermischungen bei erhöhter Temperatur Verträglichkeit (Einphasigkeit), bei niederer Temperatur Unverträglichkeit (Phasentrennung) (vgl. O. Olabisi, L.M.Robeson, M.T. Shaw, Polymer-Polymer-Miscibility, Academic Press 1979; Kirk-Othmer, loc.cit, pp. 457 - 460; DE-A 37 08 428 Bei den vorliegenden Polymermischungen PM tritt bevorzugt das Phänomen der LCST auf.

Die Polymerkomponente A)

Bei der Polymerkomponente A) handelt es sich um ein Copolymerisat, aufgebaut aus Styrol und Acrylsäuremethylester. Die Herstellung derartiger Copolymerisate ist an sich bekannt (vgl. "Herstellung der Polymerisate").
Besonders interessant sind Copolymere, die nur aus Styrol und Acrylsäuremethylester aufgebaut sind. Daneben können aber noch als Komponente c) bis in Anteilen zu < 10 Gew.-% im allgemeinen von 0,5 bis < 10 Gew.-% andere monomere Vinylverbindungen mit in das Copolymere einpolymerisiert werden. Insbesondere sind hier einerseits von Styrol unterscheidbare Monomere vom Styroltyp wie z.B. $\alpha$-Methylstyrol oder m- bzw. p-Hethylstyrol oder andererseits von Methylacrylat unterscheidbare Derivate der Acrylsäure, insbesondere Ester der Acrylsäure mit 2 - 12 Kohlenstoffatomen im Alkoholrest, so z.B. Ethylacrylat, Butylacrylat, 2-Ethylhexylacrylat, zu nennen.

Ebenso kann die Polymerkomponente A) kleinere Anteile (d.h. von 1 bis < 10 Gew.-%) an Methacrylsäureestern enthalten, z.B. Methylmethacrylat, Butylmethacrylat.
In der Regel sind diese von Styrol und Methylacrylat unterscheidbaren Comonomeren also unpolar. Der Anteil der Copolymeren A), an Acrylnitril, Allylalkohol, 2-Hydroxyhexafluoroisopropylstyrol,Maleinsäureanhydrid und anderen Derivaten der Maleinsäure soll, wenn vorhanden von 0,5 bis < 5 Gew.-%, bevorzugt < 1 Gew.-% und ganz besonders bevorzugt 0 Gew.-% betragen.
Der Anteil an Methacrylsäure, Acrylsäure, Methacrylamiden, Acrylamiden, Aminoalkylestern und -amiden, Hydroxyalkylestern und Amiden der Methacrylsäure und Acrylsäure ist ebenfalls begrenzt. Der Gehalt an diesen Monomeren - falls vorhanden - liegt im Bereich von 0,5 bis < 5 Gew.-%, bevorzugt 0,5 bis < 3 Gew.-% und ganz besonders bevorzugt 0,5 bis < 1,5 Gew.-%.

Die Polymerkomponente B)

Die Polymerkomponente B) stellt ein Polymerisat, vorzugsweise ein Homopolymerisat aus Methylmethacrylat dar. Sofern die Polymerkomponente B) nicht reines Polymethylmethacrylat darstellt, kann B) bevorzugt in Anteilen von 0,5 bis < 10 Gew.-%, besonders bevorzugt 0,5 bis < 5 Gew.-% Vinylmonomere als Comonomere enthalten, wobei Ester der Acrylsäure mit $C_1$-$C_{12}$-Alkohlen wie Methylacrylat, Ethylacrylat, Butylacrylat bevorzugt sind. Daneben kann die Polymerkomponente B) auch Styrole oder von Methylmethacrylat unterscheidbare Ester der Methacrylsäure enthalten, wie beispielsweise Butyl-, bzw. Ethyl-Methacrylat. Der Anteil dieser Monomeren ist, wie bereits ausgeführt, auf Anteile von 0,5 bis < 10 Gew.-%, bevorzugt < 5 Gew.-% beschränkt.

Herstellung der Polymerisate A) und B)

Die Herstellung der Polymerisate A) und B) kann nach den bekannten Regeln der Polymerisation und nach bekannten Verfahren erfolgen. Die Polymeren vom Typ A) können z.B. nach Houben-Weyl, Methoden der Organischen Chemie, 4. Auflage, Bd. XIV/1, pp. 761 - 841, Georg Thieme-Verlag (1961) hergestellt werden. Dabei kann vorzugsweise das radikalische, aber auch ionische Polymerisationsverfahren zur Anwendung kommen. Die Molgewichte M der erfindungsgemäß eingesetzten Polymeren A) liegen in der Regel oberhalb von 3 000, bevorzugt im Bereich von 5 000 bis 1 000 000, besonders bevorzugt im Bereich 20 000 bis 500 000 (Bestimmung durch Lichtstreuung). Vorzugsweise ist das Polymere A) nicht vernetzt.
Die Herstellung der Homo- bzw. Copolymerisate B) erfolgt nach bekannten Verfahren (vgl. H. Rauch-Puntigam, Th. Völker, Acryl- und Methacrylverbindungen, Springer-Verlag 1967). Wenn auch prinzipiell eine

Herstellung durch anionische Polymerisation oder Group-Transfer-Polymerisation [siehe auch O.W. Webster et al. J. Am.Chem. Soc., 105 5706 1983)] möglich ist, so ist doch die bevorzugte Herstellungsform die radikalische Polymerisation. Die Polymerisation kann in Masse, in Suspension, in Emulsion oder in Lösung erfolgen.

Bei der radikalischen Polymerisation finden vorzugsweise die üblichen radikalischen Initiatoren, beispielsweise peroxidische, insbesondere organische Peroxidverbindungen wie Dibenzoylperoxid oder Dilauroylperoxid oder Azoverbindungen wie Azodiisobutyronitril oder gegebenenfalls Redoxinitiatoren in Mengen von gewöhnlich ca. 0,01 bis 2 Gew.-% (bezogen auf die Monomeren) Anwendung.
Die Startradikale können jedoch auch durch energiereiche Strahlung erzeugt werden. Als Regeler können gegebenenfalls die üblichen Schwefelregler, insbesondere Mercaptoverbindungen eingesetzt werden, vorzugsweise in Mengen von 0,1 bis 2 Gew.-% (bezogen auf die Monomeren). Die Molekulargewichte der Polymerisate haben einen gewissen Einfluß auf die Verträglichkeit; so ist ein niedermolekulares Polymethylmethacrylat (J = 11 ml/g) deutlich besser verträglich mit einem Styrol-Methylacrylat-Copolymeren als ein Polymethylmethacrylat mit J = 52 ml/g. Siehe Beispiele.

Die Molgewichte M der Polymerisate B) liegen in der Regel oberhalb von 3 000, im allgemeinen im Bereich von 10 000 bis 1 000 000, vorzugsweise 20 000 bis 300 000 (Lichtstreuung). Bei der Auswahl der Monomerkomponenten, die als Comonomere bei B) eingesetzt werden sollen, ist darauf zu achten, daß die Glastemperatur Tg des resultierenden Polymerisats die technische Anwendbarkeit des Gesamtsystems PM nicht einschränkend beeinflußt. So soll für die Herstellung von Formkörpern aus der Polymermischung PM wenigstens eines der Polymeren A) und B) eine Glastemperatur Tg > 70 Grad C aufweisen. Bevorzugt ist für diese Anwendung, daß auch die Polymermischung PM eine Glastemperatur Tg > 70 Grad C aufweist. (Zur Bestimmung der Tg vgl. D.R. Paul, S. Newman, Polymer Blends Vol. I, Chapter 5, Academic Press, New York, 1978; Die Abschätzung der Tg aus den Monomeren kann z.B. anhand von Vieweg-Esser, Kunststoff-Handbuch, Band IX, pp. 333 - 340 Carl Hanser-Verlag 1975, vorgenommen werden). Diese Einschränkung gilt bevorzugt für die Herstellung von spritzgegossenen, gepreßten bzw. extrudierten Gegenständen aus der Polymermischung PM. Für andere Anwendungsgebiete, beispielsweise für Lacke, für Elastomere oder für eine reversible thermotrope Verglasung (Polymermischung mit Trübungspunkt beim Erwärmen) also für eine Anwendung gemäß DE-A 34 36 477 sind jedoch solche Polymermischungen PM bevorzugt, die eine Tg < 70 Grad C aufweisen. Besonders bevorzugt sind jedoch Polymermischungen PM, die eine Tg > 70 Grad C aufweisen.

Herstellung der Mischungen PM

Die verträglichen Mischungen PM können durch die unterschiedlichen Verfahren hergestellt werden; sie werden z.B. durch intensives mechanisches Vermischen der Komponenten A) und B) in der Schmelze, im Extruder usw. erzeugt; oder sie können auch aus einem gemeinsamen Lösungsmittel heraus als sogenannte "solution cast polyblends" hergestellt werden (vgl. Kirk-Othmer "Encyclopedia of Chemical Technology" 3rd. Ed. Vol. 18, pg. 443 - 478, J. Wiley, 1982). Auch kann so vorgegangen werden, daß Polmer A) in der Monomermischung des anderen Polymeren B) aufgelöst wird und anschließend in Gegenwart von Polymer A) erzeugt wird. Umgekehrt kann natürlich auch Polymer A) in Gegenwart des Polymeren B) erzeugt werden. Ebenso kann die Polymermischung PM aus gemeinsamen Fällungsmitteln erzeugt werden. Der Mischungsart sind keine Grenzen gesetzt. Man erzeugt in der Regel zunächst Mischungen der Komponenten A) und B) wobei vorteilhaft von Feststoffen in Form beispielsweise eines Perlpolymerisats oder eines Granulats ausgegangen wird unter Verwendung langsam laufender Mischaggregate wie z.B. Trommel-, Rhönrad-, Doppelkammer-Pflugscharmischern. Die langsam laufenden Mischaggregate verursachen ein mechanisches Mischen, ohne daß die Phasengrenzen aufgehoben werden (vgl. Ullmanns Encyklopädie der Technischen Chemie, 4. Auflage, Bd. 2, pg 282 - 311, Verlag Chemie). Anschließend erfolgt die thermoplastische Aufbereitung durch homogenes Mischen in der Schmelze unter Verwendung von heizbaren Mischaggregaten bei den dafür geeigneten Temperaturen z.B. 150 bis ca. 300 Grad C in Knetern oder vorzugsweise Extrudern, z.B. Ein- oder Mehrschneckenextrudern oder gegebenenfalls in Extrudern mit oszillierender Schnecke und Scherstiften (z.B. im BUSSCO-Kneter). Man kann nach diesen Verfahren Gleichkorngranulate (z.B. Heißabschlag, Würfelform, Rundkorn) herstellen. Die Korngröße der Granulate liegt dabei im Bereich 2 bis 5 mm. Eine weitere, einfache Methode zur Erzeugung der Polymerverbindungen PM ist das Abmischen von Polymerdispersionen (enthaltend Polymerkomponente A) und Polymerdispersionen, enthaltend die Polymerkomponente B). Diese Dispersionsmischungen können gemeinsam koaguliert werden, gemeinsam sprühgetrocknet werden oder gemeinsam auf einem Extruder abgeguetscht werden. Andererseits können die Dispersionsmischungen auch gemeinsam zu einem Film aufgetrocknet werden.

Vorteilhafte Wirkungen der Mischungen PM

Ein Vorteil der erfindungsgemäßen Polymermischungen liegt bereits darin, daß sie - im Unterschied zu Mischungen aus anderen Poly(meth)acrylaten und Polystyrolen - verträglich sind. D.h. die erfindungsgemäßen Polymermischungen sind im nicht-pigmentierten Zustand im Unterschied zu nichtverträglichen Polystyrol/Poly(meth)acrylatabmischungen glasklar (sie zeigen keine Lichtstreuung, d.h. in der Regel ist der Haze < 10 %). Erfindungsgemäß sind aber auch solche Mischungen, die LCST bzw. UCST zeigen.

Besonderes Interesse finden auch Polymerkompositionen, die zu ca. 40 - 99 Gew.-%, bevorzugt 70 - 95 Gew.-% aus der Polymermischung PM und zu 60 - 1 Gew.-%, bevorzugt 30 - 5 Gew.-% aus einem weiteren von A) und B) chemisch unterscheidbaren Polymeren P bestehen, wobei gilt, daß Polymer P mit Polymer A), B) und mit der Mischung PM unverträglich ist.
In der Regel wird dabei die Zusammensetzung der Polymermischung PM so gewählt, daß der Brechungsindex des Polymeren P mit dem Brechungsindex der Mischung PM übereinstimmt. In der Regel soll also bei Raumtemperatur gelten:

$$| n_D^{25}{}_{PM} - n_D^{25}{}_{P} | < 0{,}01$$

Im allgemeinen wird das mit PM unverträgliche Polymere P eine Tg < 20 Grad C aufweisen und wenigstens teilweise mit wenigstens einem der Bestandteile der Polymermischung PM, also mit A) oder B), kovalent verknüpft sein. Darüber hinaus kann das Polymere P vernetzt sein.
Ganz besonders bevorzugt ist der Fall, daß das Polymere P Polybutadien oder Polyisopren ist. Daneben sind auch vernetztes Polyethylacrylat und Polybutylacrylat gegebenenfalls mit geringen Anteilen (z.B. 10 - 25 Gew.-%) Styrol als Polymere P von Interesse. Von Bedeutung ist jedoch dabei, daß das Polymere P weder mit Polymerkomponente A) noch mit Polymerkomponente B) noch mit der Polymermischung PM verträglich ist. Besonders bevorzugt ist der Fall, daß das Polymere P wenigstens teilweise kovalent mit Polymer A) verknüpft ist.
Polymerkompositionen, aufgebaut aus 40 - 99 Gew.-% PM und 1 - 60 Gew.-% P zeichnen sich, insbesondere wenn P eine Tg < 20 Grad C aufweist, durch eine im Vergleich zu reinem PM verbesserte Schlagzähigkeit aus.
Durch Umhüllung von Polymer A) mit Polymer B) ist die Herstellung einer optischen Faser möglich.

Die folgenden Beispiele dienen zur Erläuterung der Erfindung.

Die Bestimmung der VICAT-Erweichungstemperatur erfolgt nach DIN 53460, die Bestimmung der Viskositätszahl J (ml/g) in Anlehnung an DIN 51 562, Teil 2 und Teil 3 und DIN 7745, Teil 2. Die Bestimmung der Lichtdurchlässigkeit kann - sofern nicht anders vermerkt -nach DIN 5036 vorgenommen werden. Die Trübung (haze) wird in % (ASTM D 1003) angegeben.

BEISPIELE

Beispiel 1

Herstellung der Polymerkomponente B1)

1000 g Methylmethacrylat wird mit 5 g Lauroylperoxid sowie 50 g 2-Ethylhexylthioglykolat versetzt und bei 70 Grad C in wäßriger Suspension polymerisiert.
Man erhält nach Filtration und Trocknung ein Polymethylmethacrylat mit niedrigem Molekulargewicht (J = 22 ml/g).

Beispiel 2

Polymerkomponente B2)

Als Polymerkomponente B) wird ein kontinuierlich hergestelltes Copolymerisat aus 96 Gew.-% Methylmethacrylat und 4 Gew.-% Methylacrylat verwendet. Das Molekulargewicht des Polymeren B) gemäß Beispiel 2 ist charakterisiert durch J = 52 ml/g. Als Polymeres B) gemäß Beispiel 2 kann ® Plexiglas Y7N der Firma Röhm GmbH verwendet werden.

Beispiel 3

Herstellung des Copolymeren A1)

Eine Mischung aus 74,35 g Methylacrylat, 25 g Styrol, 0,5 g t-Dodecylmercaptan, 0,15 g Azoisobutyronitril wird unter Ausschluß von Luft in einem Beutel ® Hostaphan der Fa. Hoechst) 16 h bei 50 Grad C polymerisiert. Danach wird das Polymere in Methanol ausgefällt und getrocknet. Da das Polymere nicht bis zum vollständigen Umsatz polymerisiert wurde, wurde die Zusammensetzung des Copolymeren A1 analytisch bestimmt.
Das so hergestellte Copolymere A1) hat danach die Zusammensetzung: 53 Gew.-% Methylacrylat, 47 Gew.-% Styrol. J = 47 ml/g

Beispiel 4

Herstellung des Copolymeren A2)

Man benutzt dasselbe Polymerisationsverfahren wie in Beispiel 3, wählt jedoch andere Einwaagen:

| | |
|---|---|
| 50,0 g | Methylacrylat |
| 50,0 g | Styrol |
| 0,5 g | t-Dodecylmercaptan |
| 0,15 g | Azoisobutyronitril |

Auch hier wird das Polymere ausgefällt und analysiert. Zusammensetzung des Copolymeren A2)

| | |
|---|---|
| 36 Gew.-% | Methylacrylat |
| 64 Gew.-% | Styrol |
| J = 37 ml/g | |

Beispiel 5

Herstellung des Copolymeren A3)

Man verfährt wie in den Beispielen 3 und 4. Einwaage:

| | |
|---|---|
| 75,0 g | Styrol |
| 25,0 g | Methylacrylat |
| 0,5 g | t-Dodecylmercaptan |
| 0,15 g | Azoisobutyronitril |

Analyse nach Aufarbeitung:
Zusammensetzung des Copolymeren A3)

| | |
|---|---|
| 23 Gew.-% | Methylacrylat |
| 77 Gew.-% | Styrol |
| J = 27 ml/g | |

Beispiel 6

Herstellung der verträglichen Polymermischung A1)-B1)

Die Polymeren gemäß Beispiel 1 (= Polymeres B1) und Beispiel 3 (= Copolymeres A1) werden zu 20 Gew.-% in Toluol gelöst. Die Lösungen werden gemischt, es wird ein Film aufgezogen und nach Trocknung

visuell beurteilt:

| | | | | |
|---|---|---|---|---|
| Mischungs-verhältnisse: | 5 Gew.% | Polymeres B1, | 95 Gew.% | Polymeres A1 |
| | 25 | " | 75 | " |
| | 50 | " | 50 | " |
| | 75 | " | 25 | " |
| | 95 | " | 5 | " |

In allen Fällen wird ein glasklarer Film erhalten, der auch beim Erwärmen auf 260 Grad C glasklar bleibt.

Beispiel 7

Herstellung der verträglichen Polymermischung A2)-B1)

Man verfährt wie in Beispiel 6, wählt jedoch als Mischungskomponenten die Polymeren B1) und A2). Auch hier wird bei allen Mischungsverhältnissen ein glasklarer Film erhalten, der beim Erwärmen auf 260 Grad C keinerlei Trübung zeigt.

Beispiel 8

Herstellung der verträglichen Polymermischung A3-B1

Man verfährt wie in den Beispielen 6 und 7, wählt jedoch als Mischungskomponenten die Polymeren B1) und A3). Man erhält in jedem Fall glasklare Filme, die jedoch zum Teil beim Erwärmen entmischen (d.h. diese Polymermischungen zeigen eine Lower Critical Solution Temperatur = LCST)

TABELLE 1

| Mischungsverhältnis (Gew.-% B1) | Trübungstemperatur beim Erwärmen (Grad C) |
|---|---|
| 5 | > 260 d.h. keine Eintrübung |
| 25 | 241 |
| 50 | 166 |
| 75 | 214 |
| 95 | > 260 d.h. keine Eintrübung |

Beispiele 9 - 11

Man verfährt wie bei den Abmischungen gemäß Beispiel 6 - 8, wählt jedoch als Polymeres B) das Polymere B2) gemäß Beispiel 2. Mischungspartner für das Polymere B2) sind wie zuvor die Copolymeren A1), A2) und A3).
Während die Polymermischungen PM aus A1)-B2), bzw. A2)-B2) bei Raumtemperatur in allen Verhältnissen verträglich sind, beim Erwärmen jedoch Entmischung auftritt (LCST), ist die Polymermischung A3)-B2) z.T. bereits bei Raumtemperatur entmischt = unverträglich.
In Tabelle 2 werden die Trübungstemperaturen (=erstmaliges trüb werden der zunächst glasklaren Proben beim Erwärmen als Funktion der Mischungszusammensetzung) angegeben.

TABELLE 2

| Trübungstemperaturen der Polymermischungen B2)-A1), -A2), -A3) | | | |
|---|---|---|---|
| Mischungsverhältnis (Gew.-% B2) | Trübungstemperatur (Grad C)der Mischung von B2 mit den Copolymeren | | |
| | A1 | A2 | A3 |
| 5 | > 260[1)] | 188 | 100 |
| 25 | 217 | 145 | < RT[2)] |
| 50 | 194 | 130 | < RT |
| 75 | > 260 | 167 | < RT |
| 95 | > 260 | > 260 | 167 |

1) Bei 260 Grad C keine Eintrübung
2) Bereits bei Raumtemperatur trüb

Bewertung der Mischungsversuche gemäß den Beispielen 6-11

Während bei Abmischung mit niedermolekularem PMMA (J = 11 ml/g) die Styrol-Methylacrylat-Zusammensetzung des Copolymeren A) in weiten Grenzen variiert werden kann ohne die Verträglichkeit zu beeinträchtigen, muß bei höhermolekularer Polymerkomponente B) ein bestimmtes Mischungsverhältnis Styrol/Methylacrylat in Copolymeren A) für eine gute Verträglichkeit der Polymeren gegeben sein. Dabei sind insbesondere hohe Anteile an Styrol in Copolymeren A) zu vermeiden. Charakteristisch für die verträglichen Polymermischungen PM ist das Auftreten einer LCST, d.h. besonders gute Verträglichkeit der Polymeren bei tiefer Temperatur und Entmischung bei erhöhter Temperatur.

Beispiel 12

Herstellung einer Polymermischung PM mit EPDM als unverträglicher Abmischkomponente P

| | |
|---|---|
| 200,0 g | EPSYN 55 $^R$ (= Ethylen-Propylen-Norbornadien-Copolymeres der Firma COPOLYMER werden in |
| 800,0 g | Butylacetat gelöst und auf 120 Grad C erwärmt. (= Lösung des Polymeren P) |

Dazu tropft man innerhalb 20 Minuten bei 120 Grad C eine Mischung aus

| | |
|---|---|
| 36,0 g | Methylacrylat |
| 24,0 g | Styrol (Monomermischung des Polymeren A) |
| 1,35g | t-Butylperoctoat |
| 90,0 g | Butylacetat |

Anschließend dosiert man ebenfalls bei 120 Grad C innerhalb von 100 Minuten eine Mischung zu, bestehend aus

| | |
|---|---|
| 340,0 g | Methylmethacrylat (Monomer des Polymeren B) |
| 510,0 g | Butylacetat |
| 4,7 g | t-Butylperoctoat |

Nach Abkühlung auf 80 Grad C wird eine Mischung aus

| | |
|---|---|
| 10,0 g | Methylmethacrylat und |
| 10,0 g | Trisallylcyanurat |
| 4,0 g | t-Butylperoctoat zugegeben |

2 Stunden bei 80 Grad C und anschließend 2 Stunden bei 90 Grad C gerührt.
Nach Abkühlen auf Raumtemperatur erhält man eine organische Dispersion, die in Methanol ausgefällt wird.
Das ausgefällte Polymerisat wird im Vakuum getrocknet.
Durch Abmischen des getrockneten Polymerisats (30 %) mit 70 % eines Polymethylmethacrylats gemäß Beispiel 2 (PMMA mit J = 52 ml/g) erhält man eine Polymerkomposition, enthaltend ca.

| | |
|---|---|
| 10 Gew.-% | EPDM = Polymer P |
| 3 Gew.-% | eines teilweise auf das EPDM gepfropften Copolymeren aus Styrol und Methylacrylat = Polymer A) und |
| 87 Gew.-% | PMMA (teilweise gepfropft auf EPDM) = Polymer B). |

Aus dieser Polymerkomposition werden auf einer Spritzgußmaschine Prüfkörper gespritzt (Normkleinstäbe). Dabei werden folgende Meßwerte erhalten:

| | | |
|---|---|---|
| VST (16 h 80 Grad C) | 100 Grad C | (108 Grad C)* |
| Schlagzähigkeit(KJ/m$^2$) | 63 | ( 15) |
| Kerbschlagzähigkeit (KJ/m$^2$) | 5,5 | (1,5) |

*Vergleichswerte für reines PMMA

**Patentansprüche**

**1.** Verträgliche Polymermischungen aus zwei unter sich verschiedenen Polymerkomponenten

dadurch gekennzeichnet,

daß die Polymermischung PM besteht aus:
A) 0,1 bis 99,9 Gew.-% eines Copolymeren, aufgebaut aus
a) 90 bis 10 Gew.-% Methylacrylat
b) 10 bis 90 Gew.-% Styrol
c) 0 bis <10 Gew.-% einer oder mehreren weiteren von Methylacrylat und Styrol verschiedenen monomeren Vinylverbindungen
und
B) 99,9 bis 0,1 Gew.-% eines Polymeren, aufgebaut aus
a) > 90 - 100 Gew.-% Methylmethacrylat
b) < 10 - 0 Gew.-% einer weiteren von Methylmethacrylat verschiedenen monomeren Vinylverbindung

**2.** Verträgliche Polymermischungen gemäß Anspruch 1, dadurch gekennzeichnet, daß Polymer A) aufgebaut ist aus
85 - 30 Gew.-% Methylacrylat und
15 - 70 Gew.-% Styrol

**3.** Verträgliche Polymermischungen gemäß den Ansprüchen 1 und 2, dadurch gekennzeichnet, daß das Polymere B) aufgebaut ist aus
92 - 99,5 Gew.-% Methylmethacrylat und
8 - 0,5 Gew.-% eines Acrylsäurealkylesters.

**4.** Polymerkomposition, aufgebaut zu 40 - 99 Gew.-% aus der Polymermischung PM gemäß den Ansprüchen - 3 und 60 - 1 Gew.-% eines weiteren von A) und B) unterscheidbaren Polymeren P, mit der Maßgabe, daß P mit A), B) und mit PM unverträglich ist.

## Claims

1. Compatible polymer mixtures of two polymer components different from each other characterised in that the polymer mixture PM consists of:
   A) 0.1 to 99.9 wt.% of a copolymer, synthesised from
      a) 90 to 10 wt.% of methylacrylate
      b) 10 to 90 wt.% of styrene
      c) 0 to <10 wt.% of one or more further monomer vinyl compounds different from methyl acrylate and styrene

   and
   B) 99.9 to 0.1 wt.% of a polymer, synthesised from
      a) > 90 - 100 wt.% of methyl methacrylate and
      b) < 10 - 0 wt.% of a further monomer vinyl compound different from methyl methacrylate.

2. Compatible polymer mixtures according to claim 1, characterised in that the polymer A) is synthesised from 85 - 30 wt.% of methyl acrylate and 15 - 70 wt.% of styrene.

3. Compatible polymer mixtures according to claims 1 and 2, characterised in that the polymer B) is synthesised from
   92 - 99.5 wt.% of methyl methacrylate and
   8 - 0.5 wt.% of an acrylic acid alkyl ester.

4. A polymer composition, consisting, in an amount of 40 - 99 wt.%, of the polymer mixture PM, according to claims 1 - 3, and of 60 - 1 wt.% of a further polymer P which may be distinguished from A) and B), with the proviso that P is incompatible with A), B) and PM.

## Revendications

1. Mélanges compatibles de polymères, constitués de deux composants polymères différents l'un de l'autre, caractérisés en ce que le mélange de polymères PM est constitué de :
   A) 0,1 à 99,9 % en poids d'un copolymère, lui-même constitué de
      a) 90 à 10 % en poids d'acrylate de méthyle,
      b) 10 à 90 % en poids de styrène,
      c) 0 à <10 % en poids d'un ou plusieurs autres composés vinyliques monomères différents de l'acrylate de méthyle et du styrène,

   et
   B) 99,9 à 0,1 % en poids d'un polymère, lui-même constitué de
      a) >90 - 100 % en poids de méthacrylate de méthyle,
      b) <10 - 0 % en poids d'un autre composé vinylique monomère différent du méthacrylate de méthyle.

2. Mélanges compatibles de polymères selon la revendication 1, caractérisés en ce que le polymère A) est constitué de
   85 - 30 % en poids d'acrylate de méthyle et
   15 - 70 % en poids de styrène.

3. Mélanges compatibles de polymères selon les revendications 1 et 2, caractérisés en ce que le polymère B) est constitué de
   92 - 99,5 % en poids de méthacrylate de méthyle et
   8 - 0,5 % en poids d'un acrylate d'alkyle.

4. Composition polymère, constituée, pour 40-99 % en poids, du mélange de polymères PM selon les revendications 1-3, et de 60-1 % en poids d'un autre polymère P, pouvant être distingué de A) et de B), du moment que P n'est pas compatible avec A), avec B) ou avec PM.